# EUROPEAN PATENT APPLICATION

(11) **EP 4 769 818 A1**
(43) Date of publication of application: **01.07.2026**
(21) Application number: 25215393.7
(22) Date of filing: 12.11.2025
(51) Int. Cl.: H01M 50/545, H01M 50/548, H01M 50/552, H01M 50/559, H01M 50/56

(54) **SECONDARY BATTERY AND MANUFACTURING METHOD OF THE SAME**

(30) Priority: 26.12.2024 KR 20240197160
(71) Applicant: SK On Co., Ltd., Seoul 03161 (KR)
(72) Inventor: KWAK, Seung Ho, Daejeon 34124 (KR); PARK, Soo Min, Daejeon 34124 (KR); PARK, Jae Yun, Daejeon 34124 (KR); LEE, Joo Hyuk, Daejeon 34124 (KR); CHO, Myeong Shin, Daejeon 34124 (KR); LEE, Dong Gu, Seongnam-si 13558 (KR)
(74) Representative: Stolmár & Partner Patentanwälte PartG mbB

(57) **Abstract**

Provided are secondary batteries and methods for manufacturing the same. According to one aspect of the present disclosure, a secondary battery may be provided, which includes an electrode assembly to which a current collector is coupled, a can that accommodates the electrode assembly therein and is provided with a coupling hole in an upper surface thereof facing the current collector, and a terminal inserted into the coupling hole and electrically connected to the current collector.

## Description

### TECHNICAL FIELD

The present disclosure relates to a secondary battery and a method of manufacturing the same.

### BACKGROUND

Secondary batteries are a means of energy storage which can be repeatedly charged and discharged through electrochemical reactions. The secondary battery may be used in a wide variety of fields as power sources. For example, secondary batteries are widely utilized in the field of mobile devices such as cell phones, notebooks, tablets, and the like, and are being explored for wider utilization in fields of transportation such as in vehicles, aircraft, and ships. Further, demand for secondary batteries is also rapidly increasing in the field of energy storage systems (ESSs) for storing surplus electricity produced by other means.

Secondary batteries may be classified as pouch type, prismatic type, cylindrical type, or coin type depending on the packaging form. Among the above mentioned types, demand for the cylindrical secondary battery is rapidly increasing in the field of vehicles in recent years due to advantages such as standardized sizing, and convenience of mass production.

Recently, cylindrical secondary batteries have been produced with a tabless structure in which the lead tab connecting anode and cathode is omitted. The tabless structure can secure a wider currentcarrying area than the lead tab method, making it effective in reducing resistance and heat generation. Demand has increased for efficient and cost-effective battery designs and methods for manufacturing the same, which will reduce heat resistance, and improve capacity for long-term battery use.

### SUMMARY

An object of the present disclosure is to provide a secondary battery having reduced heat resistance and improved capacity.

Another object of the present disclosure is to provide a method of manufacturing a secondary battery with reduced heat resistance and improved capacity.

According to exemplary embodiments of the present disclosure, a secondary battery with an improved terminal shape and a method of manufacturing the same is provided.

In some embodiments of the present disclosure a secondary battery is provided that facilitates coupling with a busbar and a method of manufacturing the same.

In some embodiments of the present disclosure a secondary battery is provided, comprising a current collector in which the shape may be simplified, and a method of manufacturing the same.

In some embodiments of the present disclosure a secondary battery is provided with improved manufacturability and a method of manufacturing the same.

In some embodiments of the present disclosure a secondary battery is provided that enables miniaturization of a battery module or a battery pack and a method of manufacturing the same.

Some embodiments of the present disclosure may be widely applied in green technology fields such as electric vehicles, battery charging stations, and solar and wind power generation using batteries. In addition, at least some embodiments of the present disclosure may be used in eco-friendly electric vehicles, hybrid vehicles, etc. to suppress air pollution and greenhouse gas emissions and prevent climate change.

In some embodiments of the present disclosure a secondary battery is provided comprising: an electrode assembly to which a current collector is coupled; a can that accommodates the electrode assembly therein and is provided with a coupling hole in an upper surface thereof facing the current collector; and a terminal inserted into the coupling hole and electrically connected to the current collector.

In some embodiments of the present disclosure the secondary battery may further comprise an insulator interposed between the terminal and the can.

In some embodiments, the terminal may comprise an outer portion supported on an outer surface of the can.

In some embodiments of the present disclosure, the terminal may comprise an insertion portion inserted into the coupling hole and supported by the current collector.

In some embodiments of the present disclosure, the insertion portion may be deformed by pressure and the terminal may be coupled to the can.

In some embodiments of the present disclosure, the insertion portion may comprise an opening that is open in a direction opposite to a direction in which the insertion portion is inserted into the coupling hole.

In some embodiments of the present disclosure, the insertion portion may have an open upper side and a lower side that is closed by a first support portion, and the first support portion may be electrically connected to the current collector.

In some embodiments of the present disclosure, the current collector and the first support portion may be welded.

In some embodiments of the present disclosure, the current collector and the first support portion may be bonded with a conductive adhesive.

In some embodiments of the present disclosure, the insertion portion may comprise a second support portion supported on an inner surface of the can.

In some embodiments of the present disclosure, the can may be provided with a recess in which the outer portion is seated.

In some embodiments of the present disclosure, an upper surface of the outer portion seated in the recess may have a height equal to or less than a height of an outer part of an upper surface of the can.

According to another aspect of the present disclosure, there is provided, a method of manufacturing a secondary battery, comprising: inserting a terminal into a coupling hole; pressing the terminal and coupling the terminal to a can; inserting an electrode assembly into the can; and electrically connecting the terminal and the current collector.

In some embodiments of the present disclosure, the terminal maycomprise an insertion portion inserted into the coupling hole, the insertion portion having an open upper side and a lower side closed by a first support portion, and in the pressing of the terminal and coupling to the can, the insertion portion may be pressed and a second support portion supported on an inner surface of the can may be provided.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a perspective view schematically illustrating a secondary battery according to one embodiment of the present disclosure;
FIG. 2 is a perspective view schematically illustrating an electrode assembly according to one embodiment of the present disclosure;
FIG. 3 is a schematic view illustrating the electrode assembly in FIG. 2 wound around a central axis;
FIG. 4 is a view illustrating flattened electrode tabs at upper and lower end portions of the electrode assembly wound as illustrated in FIG. 3.
FIG. 5 is a cross-sectional view of an upper portion of the secondary battery according to one embodiment of the present disclosure;
FIG. 6 is an enlarged view of a portion of FIG. 5;
FIG. 7 is a view illustrating an assembly process of the secondary battery illustrated in FIG. 5;
FIG. 8 is a cross-sectional view of an upper portion of a secondary battery according to an embodiment of the present disclosure;
FIG. 9 is a view illustrating an assembly process of the secondary battery illustrated in FIG. 8; and
FIG. 10 is a flow chart of a method of manufacturing a secondary battery according to one embodiment of the present disclosure.

### DETAILED DESCRIPTION OF THE INVENTION

According to embodiments of the present disclosure, a secondary battery is provided. In addition, a method for manufacturing the above-described secondary battery is also provided.

Unless otherwise defined herein, the terms "upper portion," "lower portion," "upper surface," "lower surface," "bottom surface," etc. as used herein indicate relative positional relationships among the respective components and do not imply an absolute vertical orientation.

Unless otherwise defined herein, when a portion such as a layer, film, thin-film, region, or plate, etc. is present "on" or "above" another portion, it may include not only the case where the portion is present "directly on" the other portion, but also the case where another portion is present between them.

Unless otherwise defined below the X-direction, Y-direction, and Z-direction as used herein are provided solely for the purpose of facilitating a clear understanding of the present disclosure, and may be defined differently depending where the reference is set.

Hereinafter, the embodiments of the present disclosure will be described in detail. However, the embodiments are merely illustrative, and the present disclosure is not limited to the specific embodiments described by way of example. It is to be understood that the components of the embodiments, as generally described and illustrated in the figures herein, may be arranged and designed in a wide variety of different configurations in addition to the described embodiments. Thus, the following description of the embodiments represented in the figures is not intended to limit the scope of the embodiments as claimed, but is merely representative of some example embodiments. Accordingly, shapes and sizes of the elements in the drawings may be exaggerated for clarity of description. Furthermore, described features, characteristics, or structures may be combined in any suitable manner in one or more embodiments. In the following description, numerous specific details are provided for a thorough understanding of embodiments. A person having ordinary skill in the relevant art will recognize, however, that the various embodiments may be practiced without one or more of the specific details, or with other methods, components, materials, etc. In other instances, well-known structures, materials, or operations are not shown or described in detail to avoid obfuscation and improve clarity.

An expression used in the singular encompasses the expression of the plural, unless it has a clearly different meaning in the context. The terms, "include," "comprise," "is configured to," or the like are used to indicate the presence of features, numbers, steps, operations, elements, portions or combinations thereof, and do not exclude the possibilities of other combination or the addition of one or more features, numbers, operations, elements, portions or combinations thereof.

Examples, systems and methods herein provide one or more secondary batteries according to embodiments of the present disclosure. In some embodiments, provided are secondary batteries with tabless electrodes, and methods of manufacturing the same.

Furthermore, the embodiments described herein may ensure safety and longevity of secondary batteries. The embodiments described herein may allow for decreased heat resistance and higher capacity in secondary batteries.

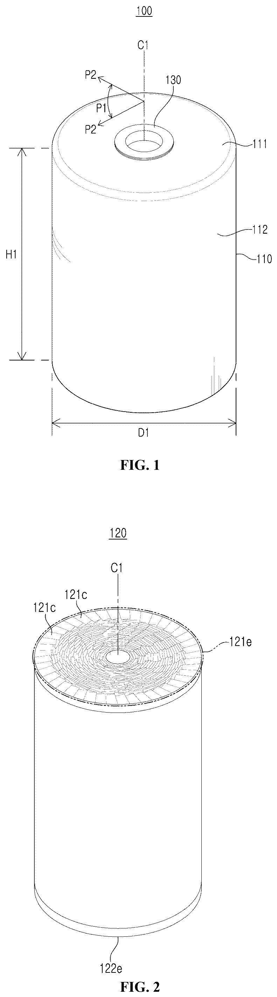

FIG. 1 is a perspective view schematically illustrating a secondary battery according to one embodiment of the present disclosure.

For convenience, hereinafter, a rotational direction about a central axis C1 illustrated in FIG. 1 is referred to as a circumferential direction P1, inward/outward directions toward and away from the central axis C1 in a plane perpendicular to the central axis C1 are referred to as radial directions P2, and a vertical direction along the central axis C1 is referred to as a vertical direction.

Referring to FIG. 1, in some embodiments, a secondary battery 100 may comprise a can 110. The can 110 may have an internal space in which an electrode assembly 120 (see Fig. 2). is accommodated. In some embodiments, the can 110 may comprise an upper surface 111 and a side surface 112, and may be provided in a cylindrical shape with an open lower portion. Although not illustrated, an opening at the lower portion of the can 110 may be provided to be properly closed by a cap plate or the like.

In some embodiments, a terminal 130 may be provided on an upper surface 111 of the can 110. As will be described in detail below, a coupling hole 113 may be provided in the upper portion of the can 110, and the terminal 130 may be inserted into the coupling hole 113 and coupled to the can 110. For example, the terminal 130 may function as a positive electrode terminal. In the above, the remaining area of the can 110 excluding the terminal 130 may function as another electrode terminal corresponding to the terminal 130. For example, the remaining area of the upper surface 111 of the can 110, excluding the terminal 130, may function as a negative electrode terminal. In some embodiments, a gasket may be provided between the terminal 130 and the can 110 for electrical insulation and mechanical sealing.

In some embodiments, the can 110 may be provided in a cylindrical shape having a predetermined diameter D1 and height H1. In other words, the secondary battery 100 may be provided in a cylindrical shape having a predetermined diameter D1 and height H1. For example, the secondary battery 100 may have a diameter of 46 mm and a height of 80 mm. In some embodiments, the secondary battery 100 having such a form factor may be referred to as a "4680 battery." In other examples, a secondary battery 100 may have a diameter of 46 mm and a height of 80 mm, a diameter of 46 mm and a height of 95 mm, or a diameter of 46 mm and a height of 110 mm. In some embodiments, a secondary battery 100 having such dimensions may be referred to as a "46xx battery." In the above "46xx," "xx" may describe the height of the form factor. As another example, the secondary battery 100 may have a diameter of 48 mm and a height of 75 mm, a diameter of 48 mm and a height of 80 mm, or a diameter of 48 mm and a height of 110 mm. In some cases, the secondary battery 100 having such a form factor may be referred to as a "48xx battery." In the "48xx" above, "xx" may describe a height of the form factor. However, in the present disclosure, the diameter D1 and the height H1 of the secondary battery 100 may vary and are not necessarily limited to the above-described examples.

Although a cylindrical secondary battery 100 is exemplified in this description, the form factor of the secondary battery 100 according to the embodiments of the present disclosure is not limited to the exemplified cylindrical shape. The secondary battery 100 according to the embodiments of the present disclosure may be implemented or applied in various forms such as a coin-type, prismatic, pouch-type, and other non-standardized shapes within the scope of the technical idea described below.

FIG. 2 is a perspective view schematically illustrating an electrode assembly according to one embodiment of the present disclosure.

Referring to FIG. 2, in some embodiments, the secondary battery 100 may comprise an electrode assembly 120. The electrode assembly 120 may be accommodated within the can 110 as described above. In some embodiments, the electrode assembly 120 may be provided in a cylindrical roll shape by being wound around the central axis C1. The electrode assembly 120 in such a roll shape may be referred to as a jelly roll in the art.

In some embodiments, the electrode assembly 120 may comprise bonding surfaces 121e and 122e at one or both end portions in a direction of the central axis C1. That is, the electrode assembly 120 may respectively comprise the bonding surfaces 121e and 122e at upper and/or lower end portions. In the illustrated embodiment, the bonding surfaces 121e and 122e are respectively provided at the upper and lower end portions of the electrode assembly 120. For convenience, hereinafter, the bonding surface 121e provided at the upper end of the electrode assembly 120 is referred to as a first bonding surface 121e, and the bonding surface 122e provided at the lower end of the electrode assembly 120 is referred to as a second bonding surface 122e.

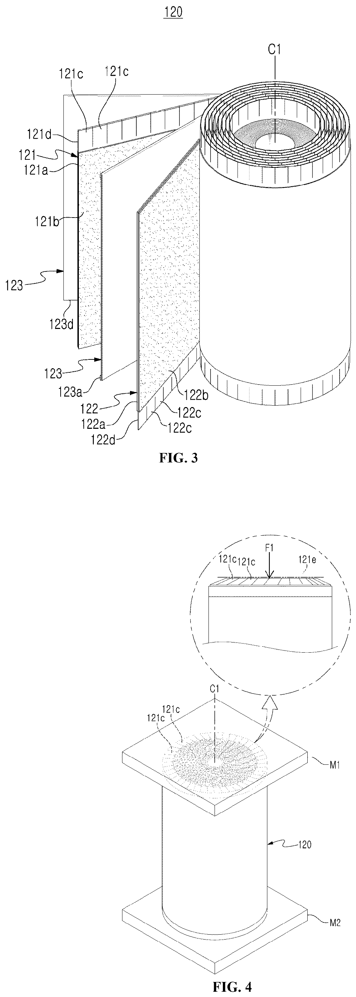

In some embodiments, each of the bonding surfaces 121e and 122e may be provided by a plurality of electrode tabs 121c and 122c bent toward the central axis C1. That is, the first bonding surface 121e may be provided by a plurality of first electrode tabs 121c bent toward the central axis C1 at the upper end of the electrode assembly 120, and the second bonding surface 122e may be provided by a plurality of second electrode tabs 122c bent toward the central axis C1 at the lower end of the electrode assembly 120 (see FIG. 3). In other words, the first bonding surface 121e may be provided as an approximate surface formed by a plurality of bent first electrode tabs 121c, and the second bonding surface 122e may be provided as an approximate surface formed by a plurality of bent second electrode tabs 122c.

In the secondary battery 100 as described above, the plurality of electrode tabs 121c and 122c may comprise the predetermined bonding surfaces 121e and 122e, and may be electrically connected to electrode terminals through the bonding surfaces 121e and 122e. In some exemplary embodiments, in the secondary battery 100, a lead tab may be omitted, and each of the bonding surfaces 121e and 122e may replace the function of the lead tab. In some embodiments, such a secondary battery 100 may be referred to as a tabless battery or the like.

In some embodiments, each of the bonding surfaces 121e and 122e as described above may be bonded to a current collector or a cap plate. For example, the first bonding surface 121e may be welded to the current collector at the upper end of the electrode assembly 120, and the second bonding surface 122e may be welded to another current collector at the lower end of the electrode assembly 120. As another example, the first bonding surface 121e may be welded to the current collector at the upper end of the electrode assembly 120, and the second bonding surface 122e may be welded to the cap plate at the lower end of the electrode assembly 120. Accordingly, each of the bonding surfaces 121e and 122e may be electrically connected to the current collector or the cap plate.

FIG. 3 is a schematic view illustrating the electrode assembly of FIG. 2 as wound around a central axis.

Referring to FIG. 3, in some embodiments, the electrode assembly 120 may have a first electrode 121 and a second electrode 122 positioned with a separator 123 therebetween. The first electrode 121 and/or the second electrode 122 may be electrodes manufactured by an electrode manufacturing device 200. The separator 123 and the first and second electrodes 121 and 122 may be wound around the central axis C1. The first electrode 121 may function as a positive electrode or a negative electrode, and the second electrode 122 may function as the corresponding negative electrode or positive electrode. In this description, it is assumed that the first electrode 121 is a positive electrode and the second electrode 122 is a negative electrode.

In some embodiments, the first electrode 121 and the second electrode 122 may each comprise metal foils 121a and 122a wound around the central axis C1, active materials 121b and 122b provided on one or more surfaces of the metal foils 121a and 122a, and the plurality of electrode tabs 121c and 122c provided in one end regions of the metal foils 121a and 122a in the direction of the central axis C1 and bent toward the central axis C1. For convenience, hereinafter, the metal foil 121a, the active material 121b, and the electrode tab 121c corresponding to the first electrode 121 will be referred to as a first metal foil 121a, a first active material 121b, and a first electrode tab 121c, respectively, and the metal foil 122a, the active material 122b, and the electrode tab 122c corresponding to the second electrode 122 will be referred to as a second metal foil 122a, a second active material 122b, and a second electrode tab 122c, respectively.

In some embodiments, the first electrode 121 may comprise the first metal foil 121a. For example, the first metal foil 121a may comprise aluminum, stainless steel, nickel, titanium, or an alloy thereof. Additionally, the first electrode 121 may comprise the first active material 121b provided on one or more surfaces of the first metal foil 121a. In some embodiments, the first active material 121b may comprise a compound capable of reversibly intercalating and deintercalating lithium ions. For example, the first active material 121b may comprise lithium-nickel metal oxide, and in some cases, the lithium-nickel metal oxide may further comprise cobalt, manganese, aluminum, or the like.

In some embodiments, the second electrode 122 may comprise the second metal foil 122a. For example, the second metal foil 122a may comprise copper, stainless steel, nickel, titanium, or an alloy thereof. Additionally, the second electrode 122 may comprise the second active material 122b provided on one or more surfaces of the second metal foil 122a. In some embodiments, the second active material 122b may comprise a compound capable of reversibly intercalating and deintercalating lithium ions. For example, the second active material 122b may comprise a carbon-based material such as crystalline carbon, amorphous carbon, carbon composite, or carbon fiber. Alternatively, the second active material 122b may comprise lithium metal, a lithium alloy, a silicon-containing material, a tin-containing material, or the like.

A separator 123 may be provided between the first electrode 121 and the second electrode 122. The separator 123 may be provided to limit electrical short-circuiting between the first and second electrodes 121 and 122 and to allow ions to flow. In some embodiments, the separator 123 may comprise a porous polymer film, a porous nonwoven fabric, and the like. For example, the porous polymer film may comprise a polyolefin polymer such as an ethylene polymer, a propylene polymer, an ethylene/butene copolymer, an ethylene/hexene copolymer, an ethylene/methacrylate copolymer, and the like. In addition, the porous nonwoven fabric may comprise high-melting-point glass fiber, polyethylene terephthalate fiber, and the like.

In some embodiments, the first electrode 121 may comprise the first electrode tab 121c. In the illustrated embodiment, the first electrode tab 121c is provided at an upper end portion of the first electrode 121. As described above, the first electrode tab 121c may be provided as a plurality of first electrode tabs 121c, and the plurality of first electrode tabs 121c may be disposed in a direction in which the first electrode 121 is wound. Additionally, the first electrode tab 121c may be provided in an upper region of the first metal foil 121a in which the coating of the first active material 121b is omitted. In other words, the first electrode 121 may comprise a first non-coated portion 121d in which the coating of the first active material 121b is omitted, and the first electrode tab 121c may be provided in the first non-coated portion 121d.

In some embodiments, the second electrode 122 may comprise a second electrode tab 122c. In the illustrated embodiment, the second electrode tab 122c is provided at a lower end portion of the second electrode 122. The second electrode tab 122c may be provided in a second non-coated portion 122d in which the coating of the second active material 122b is omitted and may be provided as a plurality of second electrode tabs 122c.

In some embodiments, a separator 123 may be provided between the first electrode 121 and the second electrode 122 as described above. In some embodiments, an upper end portion of the separator 123 may be disposed between the first electrode tab 121c and an upper end of the second electrode 122. The upper end portion of the separator 123 may function to electrically insulate between the first electrode tab 121c and the second electrode 122. Similarly, a lower end portion of the separator 123 may be disposed between a lower end of the first electrode 121 and the second electrode tab 122c. The lower end portion of the separator 123 may function to electrically insulate between the first electrode 121 and the second electrode tab 122c.

FIG. 4 is a view illustrating flattened electrode tabs at upper and lower end portions of the electrode assembly wound as illustrated in FIG. 3.

Referring to FIG. 4, the electrode assembly 120 wound as illustrated in FIG. 3 may undergo a flattening process in which the first and second electrode tabs 121c and 122c are bent toward the central axis C1, and the bent first and second electrode tabs 121c and 122c are pressed vertically to be compacted. In the flattening process, the first and second electrode tabs 121c and 122c may be pressed (F1) respectively by predetermined pressing devices M1 and M2, and thereby the first and second electrode tabs 121c and 122c may comprise the first and second bonding surfaces 121e and 122e as illustrated in FIG. 2. Afterwards, a current collector, a cap plate, or the like can be appropriately bonded to the first and second bonding surfaces 121e and 122e. For example, a current collector may be placed on the first bonding surface 121e, and the current collector may be welded to the first bonding surface 121e. In some embodiments, the welding is performed, for example, through laser welding.

Secondary batteries according to embodiments of the present disclosure are described below.

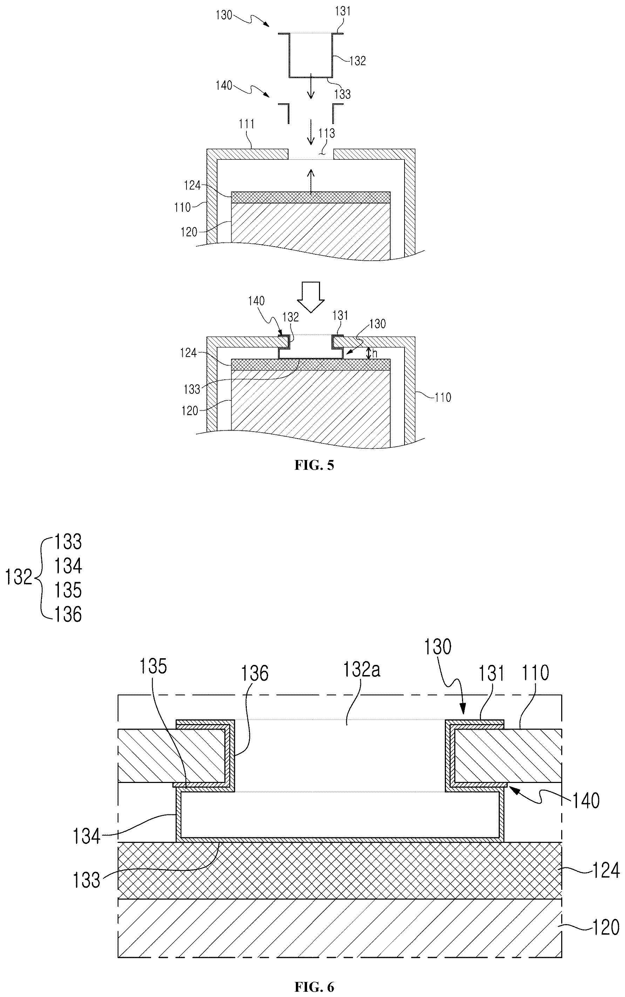

FIG. 5 is a cross-sectional view of an upper portion of the secondary battery according to one embodiment of the present disclosure.

Referring to FIG. 5, in some embodiments, a secondary battery 100 may be provided, which comprises an electrode assembly 120 to which a current collector 124 is coupled, a can 110 that accommodates the electrode assembly 120 therein and is provided with a coupling hole 121 facing the current collector 124 in an upper surface thereof, and a terminal 130 that is inserted into the coupling hole 121 and electrically connected to the current collector 124.

In some embodiments, an upper surface 111 of the can 110 is provided with the coupling hole 113, and the terminal 130 may be inserted into the coupling hole 113. The terminal 130 may be deformed by pressure and coupled to the can 110. More specifically, an insertion portion 132 may be deformed by pressure and the terminal 130 may be coupled to the can 110. Additionally, the electrode assembly 120 may be inserted into the can 110, and the current collector 124 coupled to the electrode assembly 120 may be electrically connected to the terminal 130.

In some embodiments, the secondary battery 100 may further comprise an insulator 140 interposed between the terminal 130 and the can 110. The insulator 140 may block the electrical connection between the terminal 130 and the can 110.

The shape of the insulator 140 is not particularly limited, and the insulator 140 may have a structure corresponding to the shape of the terminal 130. For example, the insulator 140 may comprise an upper portion positioned between an outer portion 131 and the can 110, a middle portion positioned between a second connecting portion 136 and the can 110, and a lower portion positioned between a second support portion 135 and the can 110.

In some embodiments, the terminal 130 may comprise the outer portion 131 supported on an outer surface of the can 110. The outer portion 131 may have a wider width (e.g., diameter) than the coupling hole 121 and may be supported on the outer surface of the can 110 without being inserted into the coupling hole 121. A depth to which the terminal 130 is inserted into the coupling hole 121 may be limited by the outer portion 131.

In some embodiments, the terminal 130 may comprise the insertion portion 132 inserted into the coupling hole 121 and supported on the current collector 124. As will be described in detail below, the insertion portion 132 may comprise a first support portion 133, a first connecting portion 134, a second support portion 135, a second connecting portion 136, etc. Before the electrode assembly 120 is accommodated in the can 110, the insertion portion 132 may be inserted into the coupling hole 121 so that a lower portion thereof protrudes downward. Additionally, the insertion portion 132 is deformed by pressure and the second support portion 135 or the like are provided, and the terminal 130 may be coupled to the can 110.

In some embodiments, since the insertion portion 132 of the terminal 130 is inserted into the coupling hole 121 and has a shape that protrudes downward, there is an advantage in that the current collector 124 may be provided in a flat-plate shape. That is, even when the current collector 124 is not provided with an elastic or protruding structure for electrical connection with the terminal, it may be easily electrically connected to the terminal 130. Accordingly, the shape of the current collector 124 may be simplified, making it easy to manufacture and reducing costs.

FIG. 6 is an enlarged view of a part of FIG. 5.

Referring to FIG. 6, in some embodiments, the insertion portion 132 may be deformed by pressure and the terminal 130 may be coupled to the can 110. Depending on the amount of pressing applied to the insertion portion 132, a gap h between the inner surface of the can 110 and the current collector 124 may be adjusted. By pressing the insertion portion 132, the gap h between the inner surface of the can 110 and the current collector 124 may be minimized, thereby improving the energy density of the secondary battery 100.

In some embodiments, the insertion portion 132 may comprise an opening 132a that is open in a direction opposite to a direction in which the insertion portion 132 is inserted into the coupling hole 121. That is, the opening 132a may be formed to open upward. The insertion portion 132, including the opening 132a, may be provided to have a roughly "C"-shaped cross-section. The insertion portion 132 comprises the opening 132a and has an empty space therein so that the weight of the terminal 130 may be reduced. The outer portion 131 and the insertion portion 132 may each have a uniform overall thickness. Therefore, by pressing a lower portion of the insertion portion 132, it is easy to provide shapes such as the first support portion 133, the first connecting portion 134, the second support portion 135, the second connecting portion 136, etc.

In some embodiments, since the insertion portion 132 comprises the opening 132a,. the first support portion 133 has a thin thickness and therefore welding between the first support portion 133 and the current collector 124 may also be performed through the opening 132a, thereby improving convenience.

In some embodiments, the insertion portion 132 may have an open upper side and a lower side that is closed by the first support portion 133, and the first support portion 133 may be electrically connected to the current collector 124. Since the insertion portion 132 is provided to open upward, the coupling between the terminal 130 and an external busbar (not shown) through the opening 132a may be performed, thereby improving the ease of connection between the busbar and the secondary battery 100 according to the present disclosure. For example, by employing a structure that is inserted into the opening 132a and engaged to the busbar, the ease of connection may be improved.

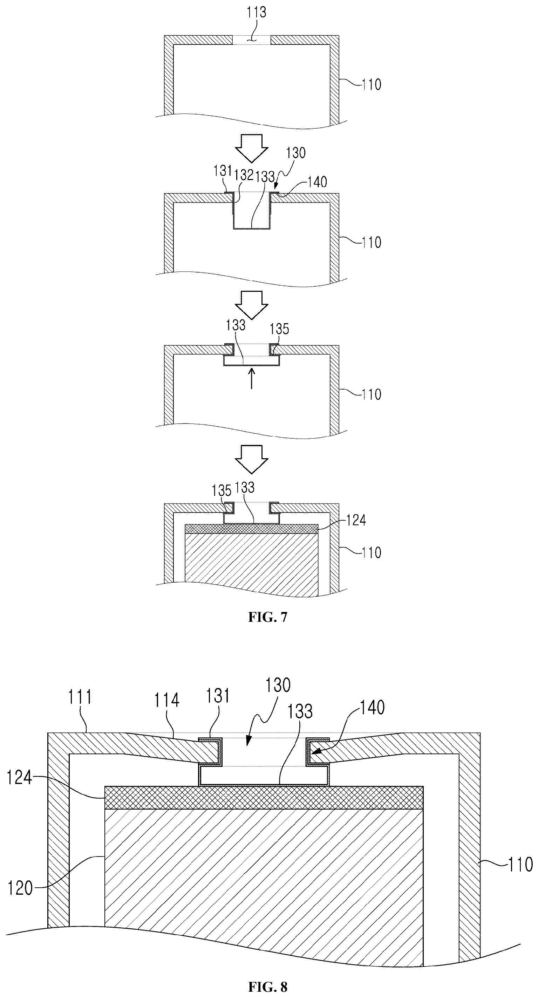

In some embodiments, the first support portion 133 may be electrically connected to the current collector 124. The electrode assembly 120 is accommodated in the can 110 and the current collector 124 may be electrically connected to the first support portion 133 (see FIG. 7).

In some embodiments, the current collector 124 and the first support portion 133 may be welded. In some embodiments, the current collector 124 and the first support portion 133 may be bonded with a conductive adhesive. More specifically, the first support portion 133 of the insertion portion 132 is supported on the current collector 124, and the first support portion 133 may be welded to the current collector 124 or bonded with a conductive adhesive. As described above, as the insertion portion 132 comprises the opening 132a, the second support portion 135 has a thin thickness, and as the welding area is exposed through the opening 132a, the ease of welding the second support portion 135 and the current collector 124 may be improved.

In some embodiments, the insertion portion 132 may comprise the second support portion 135 supported on an inner surface of the can 110. The second support portion 135 may be provided by pressing the lower portion of the insertion portion 132 inserted into the coupling hole 121. The outer portion 131 is supported on an outer surface of an upper surface of the can 110, the second support portion 135 is supported on the inner surface of the can 110, and the terminal 130 may be fixed to the can 110.

In some embodiments, the insertion portion 132 may comprise the first connecting portion 134 connecting the first support portion 133 and the second support portion 135, and the second connecting portion 136 connecting the second support portion 135 and the outer portion 131. In some embodiments, during the process of pressing the lower portion of the insertion portion 132, a height of the first connecting portion 134 may be adjusted. By adjusting the height of the first connecting portion 134, a gap h between the inner surface of the upper surface of the can 110 and the current collector 124 may be adjusted. By pressing the lower portion of the insertion portion 132 and minimizing the gap h between the can 110 and the current collector 124, the energy density of the secondary battery 100 may be improved accordingly.

FIG. 7 is a view illustrating an assembly process of the secondary battery illustrated in FIG. 5.

Referring to FIG. 7, in some embodiments, when the terminal 130 is inserted into any of the coupling holes 121(a)-(d) of Fig.3, the outer portion 131 is supported by the upper surface 111 of the can 110, and the depth to which the insertion portion 132 is inserted into the coupling hole 121 may be limited. In order to be inserted into the coupling hole 121, the insertion portion 132 may have a shape corresponding to the coupling hole 121. For example, the coupling hole 121 may be provided in a circular shape, and the insertion portion 132 may have a hollow cylindrical shape.

In some embodiments, while the terminal 130 is inserted into the coupling hole 121, the lower portion of the insertion portion 132 may be pressed to provide the second support portion 135 or the like. More specifically, the lower portion of the insertion portion 132 may be pressed upward to provide the second support portion 135 or the like. The second support portion 135 is provided and the terminal 130 may be affixed to the can 110. In addition, the gap h between the can 110 and the current collector 124 may be adjusted by the amount of pressing applied to the lower portion of the insertion portion 132, and the energy density of the secondary battery 100 may be improved by minimizing the gap h.

In some embodiments, an insulator 140 is first inserted into the coupling hole 121 along with the terminal 130, and then also deformed when the lower portion of the insertion portion 132 is deformed by pressure, thereby blocking the electrical connection between the can 110 and the terminal 130.

In some embodiments, the electrode assembly 120 may be inserted into the can 110 after pressing the lower portion of the insertion portion 132 to provide the second support portion 135 or the like. The current collector 124 is supported on the first support portion 133, and the current collector 124 and the first support portion 133 may be electrically connected by welding or a conductive adhesive. In particular, since the insertion portion 132 includes the opening 132a, the first support portion 133 has a thin thickness and the welding portion of the first support portion 133 and the current collector 124 is exposed through the opening 132a, so that welding may be performed more easily.

FIG. 8 is a cross-sectional view of an upper portion of a secondary battery according to another embodiment of the present disclosure.

Referring to FIG. 8, in some embodiments, a can 110 may be provided with a recess 114 in which an outer portion 131 is seated. That is, the recess 114 may be provided in a form in which an upper surface 111 of the can 110 is recessed around a coupling hole 121. In the upper surface 111 of the can 110, a portion provided with the recess 114 may have a smaller height than the remaining outer part.

In some embodiments, the upper surface of the outer portion 131 seated in the recess 114 may have a height equal to or less than a height of an outer part of the outer surface of the can 110. That is, when the outer portion 131 is seated in the recess 114, the upper surface of the outer portion 131 may not protrude upward more than the upper surface 111 of the can 110. Accordingly, the terminal 130 does not protrude from the upper surface 111 of the can 110, and the overall height of the secondary battery may be minimized.

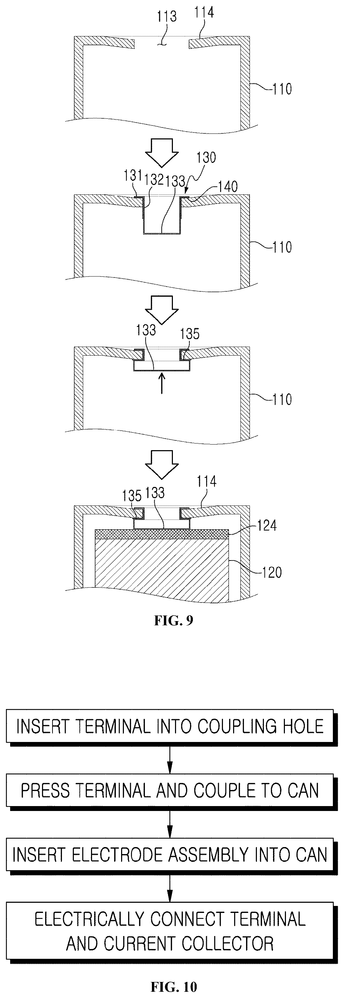

FIG. 9 is a view illustrating an assembly process of the secondary battery illustrated in FIG. 8. Descriptions identical to those previously provided are minimized.

Referring to FIG. 9, in some embodiments, the can 110 is inserted into the coupling hole 121 and the outer portion 131 is supported on the upper surface 111 of the can 110. In this case, the outer portion 131 is seated in the recess 114 provided in the can 110, and the outer portion 131 may not protrude upward more than the upper surface 111 of the can 110. Accordingly, the overall height of the secondary battery may be minimized. Accordingly, a battery module/pack including the secondary battery 100 according to the present disclosure can be miniaturized.

In some embodiments, while a terminal 130 is inserted into the coupling hole 121, a second support portion 135 may be provided by pressing a lower portion of an insertion portion 132. More specifically, the lower portion of the insertion portion 132 may be pressed upward to provide the second support portion 135 or the like. The second support portion 135 is provided and the terminal 130 is fixed to the can 110. In addition, a gap h between the can 110 and a current collector 124 may be controlled by the amount of pressing applied to the lower portion of the insertion portion 132, thereby improving the energy density of the secondary battery 100.

In some embodiments, an electrode assembly 120 may be inserted into the can 110 after pressing the lower portion of the insertion portion 132 to provide the second support portion 135 or the like. The current collector 124 is supported on a first support portion 133, and the current collector 124 and the first support portion 133 may be electrically connected by welding or a conductive adhesive.

FIG. 10 is a flow chart of a method of manufacturing a secondary battery according to one embodiment of the present disclosure.

Referring to FIG. 10, in some embodiments, the method of manufacturing a secondary battery 100 may include inserting a terminal 130 into a coupling hole 121, pressing the terminal 130 and coupling the terminal 130 to a can 110, inserting an electrode assembly 120 into the can 110, and electrically connecting the terminal 130 and a current collector 124.

In some embodiments, the operation of inserting the terminal 130 into the coupling hole 121 may be performed before an insertion portion 132 is deformed by pressure, and the insertion portion 132 may have a shape corresponding to the coupling hole 121 and may be inserted into the coupling hole 121. In some embodiments, an insulator 140 may be inserted into the coupling hole 121 along with the terminal 130. In some embodiments, an outer surface of the can 110 is provided with a recess 114, such that an outer portion 131 of the terminal 130 may be seated in the recess 114.

In some embodiments, in the operation of pressing the terminal 130 and coupling the terminal 130 to the can 110, the terminal 130 may be deformed by pressure and coupled to the can 110.

In some embodiments, the terminal 130 includes the insertion portion 132 inserted into the coupling hole 121, the insertion portion 132 may have an open upper side and a lower side closed by a first support portion 133. Also, in the operation of pressing the terminal 130 and coupling the terminal 130 to the can 110, the insertion portion 132 may be pressed and a second support portion 135 supported by an inner surface of the can 110 may be provided. The outer portion 131 and the second support portion 135 may be supported on the outer surface and the inner surface, respectively, of the upper surface 111, and the terminal 130 may be coupled to the can 110.

In some embodiments, in the operation of inserting the electrode assembly 120 into the can 110, the current collector 124 provided in the electrode assembly 120 may come into contact with the terminal 130. Since the terminal 130 is inserted into the coupling hole 121 and the insertion portion 132 has a shape that protrudes downward, even when the current collector 124 is provided in a flat plate shape, it is easy to come into contact with the terminal 130. Accordingly, the shape of the current collector 124 may be simplified.

In the operation of electrically connecting the terminal 130 and the current collector 124, the terminal 130 and the current collector 124 may be coupled by welding or a conductive adhesive. The insertion portion 132 of the terminal 130 may include an opening 132a, and welding may be performed more easily through the opening 132a.

As described above, embodiments of the present disclosure may provide a secondary battery and a method of manufacturing the same.

Also, some embodiments of the present disclosure may provide a secondary battery with an improved terminal shape and a method of manufacturing the same.

Also, some embodiments of the present disclosure may provide a secondary battery with a simplified terminal shape and a method of manufacturing the same.

Also, some embodiments of the present disclosure may provide a secondary battery that facilitates coupling with a busbar and a method of manufacturing the same.

Also, some embodiments of the present disclosure may provide a secondary battery with improved manufacturability and a method of manufacturing the same.

Also, some embodiments of the present disclosure may provide a secondary battery that enable miniaturization of a battery module or a battery pack and a method of manufacturing the same.

The technical effects that can be obtained through the embodiments of the present disclosure are not necessarily limited to the effects mentioned above. Other technical effects that are not mentioned may be clearly understood by those skilled in the art to which the present disclosure belongs from other descriptions in the specification, such as the detailed description.

Some of the aspects of the present disclosure are as follows:

Aspect 1: A secondary battery (100) comprising: an electrode assembly (120) to which a current collector (124) is coupled; a can (110) that accommodates the electrode assembly (120) therein and is provided with a coupling hole (113) in an upper surface thereof facing the current collector (124); and a terminal (130) inserted into the coupling hole (113) and electrically connected to the current collector (124).

Aspect 2: The secondary battery (100) of aspect 1, further comprising an insulator (140) interposed between the terminal (130) and the can (110).

Aspect 3: The secondary battery (100) according to any one of the preceding aspects, wherein the terminal (130) comprises an outer portion (131) supported on an outer surface of the can (110).

Aspect 4: The secondary battery (100) according to any one of the preceding aspects, wherein the terminal (130) comprises an insertion portion (132) inserted into the coupling hole (113) and supported by the current collector (124).

Aspect 5: The secondary battery (100) according to any one of the preceding aspects, wherein the insertion portion (132) is deformed by pressure and the terminal (130) is coupled to the can (110).

Aspect 6: The secondary battery (100) according to any one of the preceding aspects, wherein the insertion portion (132) comprises an opening (132a) that is open in a direction opposite to a direction in which the insertion portion (132) is inserted into the coupling hole (113).

Aspect 7: The secondary battery (100) according to any one of the preceding aspects, wherein the insertion portion (132) has an open upper side and a lower side that is closed by a first support portion (133), and the first support portion (133) is electrically connected to the current collector (120).

Aspect 8: The secondary battery (100) according to any one of the preceding aspects, wherein the current collector (120) and the first support portion (133) are welded.

Aspect 9: The secondary battery (100) according to any one of the preceding aspects, wherein the current collector (120) and the first support portion (133) are bonded with a conductive adhesive.

Aspect 10: The secondary battery (100) according to any one of the preceding aspects, wherein the insertion portion (132) comprises a second support portion (135) supported on an inner surface of the can (110).

Aspect 11: The secondary battery (100) according to any one of the preceding aspects, wherein the can (110) is provided with a recess (114) in which the outer portion (131) is seated.

Aspect 12: The secondary battery (100) according to any one of the preceding aspects, wherein an upper surface of the outer portion (131) seated in the recess (114) has a height equal to or less than a height of an outer part of an upper surface of the can (110).

Aspect 13: A method of manufacturing the secondary battery (100) according to any one of the preceding aspects, comprising: inserting a terminal (130) into a coupling hole (113); pressing the terminal (130) and coupling the terminal (130) to a can (110); inserting an electrode assembly (120) into the can (110); and electrically connecting the terminal (130) and a current collector (124).

Aspect 14: The method of aspect 13, wherein: the terminal (130) comprises an insertion portion (132) inserted into the coupling hole (113), the insertion portion (132) having an open upper side and a lower side closed by a first support portion (133); and
in the pressing of the terminal (130) and coupling the terminal (130) to the can (110), the insertion portion (132) is pressed and a second support portion (135) supported on an inner surface of the can (110) is provided.

The above description is merely an example of applying the principles of the present disclosure, and other configurations may be further included without departing from the scope of the present disclosure.

## Claims

1. A secondary battery (100) comprising:
an electrode assembly (120) to which a current collector (124) is coupled;
a can (110) that accommodates the electrode assembly (120) therein and is provided with a coupling hole (113) in an upper surface thereof facing the current collector (124); and
a terminal (130) inserted into the coupling hole (113) and electrically connected to the current collector (124).

2. The secondary battery (100) of claim 1, further comprising an insulator (140) interposed between the terminal (130) and the can (110).

3. The secondary battery (100) according to any one of the preceding claims, wherein the terminal (130) comprises an outer portion (131) supported on an outer surface of the can (110).

4. The secondary battery (100) according to any one of the preceding claims, wherein the terminal (130) comprises an insertion portion (132) inserted into the coupling hole (113) and supported by the current collector (124).

5. The secondary battery (100) according to any one of the preceding claims, wherein the insertion portion (132) is deformed by pressure and the terminal (130) is coupled to the can (110).

6. The secondary battery (100) according to any one of the preceding claims, wherein the insertion portion (132) comprises an opening (132a) that is open in a direction opposite to a direction in which the insertion portion (132) is inserted into the coupling hole (113).

7. The secondary battery (100) according to any one of the preceding claims, wherein the insertion portion (132) has an open upper side and a lower side that is closed by a first support portion (133), and the first support portion (133) is electrically connected to the current collector (120).

8. The secondary battery (100) according to any one of the preceding claims, wherein the current collector (120) and the first support portion (133) are welded.

9. The secondary battery (100) according to any one of the preceding claims, wherein the current collector (120) and the first support portion (133) are bonded with a conductive adhesive.

10. The secondary battery (100) according to any one of the preceding claims, wherein the insertion portion (132) comprises a second support portion (135) supported on an inner surface of the can (110).

11. The secondary battery (100) according to any one of the preceding claims, wherein the can **(110)** is provided with a recess (114) in which the outer portion (131) is seated.

12. The secondary battery (100) according to any one of the preceding claims, wherein an upper surface of the outer portion (131) seated in the recess (114) has a height equal to or less than a height of an outer part of an upper surface of the can (110).

13. A method of manufacturing the secondary battery (100) according to any one of the preceding claims, comprising:
inserting a terminal (130) into a coupling hole (113);
pressing the terminal (130) and coupling the terminal (130) to a can (110);
inserting an electrode assembly (120) into the can (110); and
electrically connecting the terminal (130) and a current collector (124).

14. The method of claim 13, wherein:
the terminal (130) comprises an insertion portion (132) inserted into the coupling hole (113), the insertion portion (132) having an open upper side and a lower side closed by a first support portion (133); and
in the pressing of the terminal (130) and coupling the terminal (130) to the can (110), the insertion portion (132) is pressed and a second support portion (135) supported on an inner surface of the can (110) is provided.
